# EUROPEAN PATENT APPLICATION

(11) **EP 3 819 014 A1**
(43) Date of publication of application: **12.05.2021**
(21) Application number: 19207307.0
(22) Date of filing: 05.11.2019
(51) Int. Cl.: B01D 3/00, B01D 15/22, B01F 5/06, B01F 15/02, F28F 9/02, G01N 30/60

(54) **GRID-LIKE FRACTAL DISTRIBUTOR OR COLLECTOR ELEMENT**

(71) Applicant: Hirschberg Engineering AG, 8404 Winterthur (CH)
(72) Inventor: HIRSCHBERG, Sebastian, 8408 Winterthur (CH)
(74) Representative: Henkel & Partner mbB

(57) **Abstract**

The present invention relates to a distributor element and/or collector element for uniformly distributing a first fluid, such as liquid, on a cross-sectional plane, such as on a cross-sectional plane of a mass transfer column, wherein a second main fluid, such as gas, flows in co-current flow and/or in counter-current flow with regard to the first fluid through the distributor element, wherein the distributor element comprises at least two levels separated from each other by fractal plates comprising openings and apertures, wherein each level comprises channels to be flowed through by the second main fluid and between the channels one or more flow path(s), through which the first fluid may flow, wherein the number of openings increases from the uppermost fractal plate to the lowest fractal plate.

## Description

The present invention relates to a distributor element for uniformly distributing a first fluid on a cross-sectional plane or a collector element for collecting a first fluid being distributed on a cross-sectional plane, such as on a cross-sectional plane of a mass transfer column, a mixer, a disperser, a foaming device, a chemical reactor or the like, wherein a second main fluid flows in co-current flow and/or in counter-current flow with regard to the first fluid through the distributor element. In addition, the present invention relates to an apparatus, such as a mass transfer column, which comprises one or more of such distributor elements and/or collector elements.

In many technical processes, a fluid has to be uniformly distributed on a cross-sectional plane of an apparatus, while a second fluid flows through this plane. Both fluids may be a liquid or a gas or one of the fluids is a gas, while the other is a liquid. Examples for such processes are mass-transfer processes, such as rectification, absorption and the like, mixing processes, dispersing processes, foaming processes or the like and examples for respective apparatuses are chemical reactors, rectification columns, absorption columns, gas scrubbers, falling film evaporators, film crystallizers, gas drying apparatuses, mixing devices and the like.

Typically, a distributor element is used together with another device, wherein the distributor element uniformly distributes a first fluid on or across, respectively, a cross-sectional plane of the other device. The other device is, for instance, in a mass transfer process any type of packings, such as a structured packing, whereas the device is in chemical reactors a reactor, which is operated with different types of heterogenous or homogeneous catalysts, in falling film evaporators or film crystallizers a pipe bundle, in gas scrubbers and gas drying apparatuses a packing or a mixer, in apparatuses for absorption of gas in a liquid, for dispersing or for foaming one or more static mixer(s).

Conventional distributor elements for liquids comprise open channels, through which liquid is transferred in regular distances through openings directly or via sheets indirectly onto the plane, such as the surface of a structured packing in a mass transfer column. Such distributor elements are described for example in US 4,855,089, in US 3,158,171 and in EP 0 112 978 B1. However, these distributor elements are expensive. A further disadvantage of these distributor elements is that it has to be assured during their operation that the liquid level is in all channels the same, since the liquid level determines the volume flow through the channel openings. Moreover, at least some of these distributor elements have a comparable high pressure loss and hinder the flow of the second main flow. The same applies for respective collector elements.

In order to distribute gas, often distribution lances are applied. These distribution lances comprise nozzles, which have to be embodied so that during the operation the volume flow therethrough is the same. Similar distribution lances may be used for distributing liquids. A plurality of such distribution lances may be combined to a lance grid. However, also these distributor elements are expensive and complex to be operated, have a comparable high pressure loss and hinder the flow of the second main flow. The same applies for respective collector elements.

In view thereof, the object underlying the present invention is to provide a distributor element, which uniformly distributes with a high distribution density a first fluid on a cross-sectional plane, or a collector element, which uniformly collects a first fluid being distributed on a cross-sectional plane, in particular on a cross-sectional plane of a mass transfer column, while it essentially does not interfere with the flow of a second fluid through the plane, wherein the distributor or collector element is easy and cost-efficient to produce.

In accordance with the present invention, this object is satisfied by providing a distributor element for uniformly distributing a first fluid on a cross-sectional plane or a collector element for collecting a first fluid being distributed on a cross-sectional plane, wherein a second main fluid flows in co-current flow and/or in counter-current flow with regard to the first fluid through the distributor or collector element, wherein the distributor or collector element comprises at least two fractal plates being arranged at least substantially parallel to each other defining each a level below the fractal plates, wherein the first uppermost of the at least two fractal plates comprises a first number of openings each of which being surrounded at its lower side by a wall extending downwardly and defining in the first level below the first uppermost fractal plate a channel to be flowed through by the second main fluid, wherein in the first level between the walls defining the channels one or more hollow spaces defining one or more fluid paths are formed, through which the first fluid may flow, wherein the second fractal plate of the at least two fractal plates forming the bottom of the first level comprises a second number of openings each of which being surrounded at its lower side by a wall extending downwardly and defining in the second level below the second fractal plate a channel to be flowed through by the second main fluid, wherein in the second level between the walls defining the channels one or more hollow spaces defining one or more fluid paths are formed, through which the first fluid may flow, wherein the second number of openings is higher than the first number of openings, wherein each of the channels of each of the levels is connected with at least one channel of any adjacent level, and wherein at least one of the one or more fluid paths of each of the levels is connected with at least one of the one or more fluid paths of any adjacent level by means of at least one aperture being located in the fractal plate separating the adjacent levels from each other.

The collector element in accordance with the present invention is identical to the distributor element in accordance with the present invention. However, during its use the collector element is inverted with regard to the distributor element, i.e. the uppermost plate of the distributor element corresponds to the lowermost plate of the collector element and vice versa. However, for the ease of formulation, the collector element is described as the distributor element.

While the channels allow the second main fluid, such as a gas, to flow, such as ascend, through the distributor or collector element essentially without interference, the fluid paths defined in the hollow spaces between the channel walls allow the first fluid, such as liquid, to be distributed over the cross-sectional plane of the distributor element or collected over the cross-sectional plane of the collector element, respectively. Since the number of channels increase from the first uppermost level to the lower level of the distributor or collector element (which means, as described above, for the collector element being inverted during use that the number of channels decreases from the first uppermost level to the lower level of the distributor or collector), the number and/or length of flow path(s) across the cross-sectional plane of the distributor element increases from level to level assuring in the lowest level a uniform distribution of the first fluid over the cross-sectional plane of the distributor element. Therefore, the distributor element in accordance with the present invention allows to uniformly distribute a first fluid, such as liquid, on a cross-sectional plane of for instance a mass transfer column, while it essentially does not interfere with the flow of a second fluid through the plane and consequently has during operation a low pressure loss. Likewise, the collector element in accordance with the present invention allows to uniformly collect a first fluid, such as liquid, being distributed on a cross-sectional plane of for instance a mass transfer column, while it essentially does not interfere with the flow of a second fluid through the plane and consequently has during operation a low pressure loss. In particular, the distributor element in accordance with the present invention allows to obtain a particular high distribution density and the collector element in accordance with the present invention allows to collect fluid being distributed on a cross-sectional plane in a particular high distribution density. A further particular advantage of the present invention is that the distributor or collector element can be, as described in detail further below, easily and cost-efficiently produced in particular by a generative production method, such as by screen printing. Particularly, the present invention allows to easily and cost-efficiently obtain a distributor element having at its bottom up to 200,000 and even up to 1,500,000 fluid outlets per square meter. The commercially available distributor elements do only have 100 to 200 fluid outlets per square meter.

The plates of the distributor or collector element in accordance with the present invention does not need to be arranged during the use thereof horizontally. However, for the ease of understanding the distributor or collector element in accordance with the present invention is described in the present patent application by arranging the distributor or collector element with its at least substantially parallel plates so that it is placed with the at least substantially parallel plates horizontally. The terms "first uppermost of the at least two fractal plates", "a wall extending downwardly" are to be understand in this sense. Thus, if the distributor or collector element is used in an orientation, in which all plates are vertical, the first uppermost fractal plate is that outermost fractal plate having the lowest number of openings and the walls extend at least substantially perpendicular to the surface of the uppermost fractal plate.

The terms "opening" and "aperture" are each used in accordance with the present invention with the same meaning, namely recess or hole, respectively, in a plate. However, in order to improve the clarity the term "opening" is used exclusively for a recess or hole of a plate forming together with a wall being arranged at the upper and/or lower side of the plate and surrounding the recess or hole of the plate in the level above and/or below the plate a channel to be flowed through by the second main fluid, whereas the term "aperture" is used exclusively for a recess or hole of a plate being not surrounded by a channel to be flowed through by the second main fluid so that the aperture is connecting a fluid path defined in the hollow space(s) of one level with a fluid path defined in the hollow space(s) of an adjacent level.

Furthermore, the term "level" means in accordance with the present invention the space between an upper plate and a lower plate, wherein in this space the channels to be flowed through by the second main fluid and the fluid paths are arranged. Each "level" comprises the channels, with are separated by each other by the hollow spaces. Thus, the total volume of each level is the sum of the volumes of the channels plus the sum of the volume(s) of the of the hollow space(s).

Accordingly, the term "hollow space" means the total volume of a level minus the sum of the volumes of the channels minus optional further components provided n the level, such as partition walls or the like, i.e. the "hollow space" is a 3-dimensional space. If in the level no partition wall(s) or the like are provided connecting some of the outsides of two or more of the channel walls with each other, the level will only comprise one hollow space. However, it is possible to connect some outsides of two or more of the channel walls with each other for instance by one or more partition walls to subdivide the remaining hollow space into several hollow spaces.

In contrast to the term "hollow space", the term "fluid path of a level" means in accordance with the present invention the line from an aperture of a plate being adjacent to the hollow space of a level through the hollow space to an aperture of an adjacent plate being on the opposite site of the hollow space of the same level. Except for only theoretical possible designs of the plates, any level will in practice comprise more than one fluid path, even if the level only comprises one hollow space. This is in particular the case, when at least one of both plates has more than one aperture. In other words, a "fluid path of a level" is the line (or way, respectively) a liquid may take, when it enters the hollow space of the level via the aperture of one plate and leaves the hollow space on the opposite side of the same level via one of the apertures of the adjacent plate. All in all, while the "hollow space" is a volume (namely to total volume of a level minus the sum of the volumes of the channels), the "fluid path" is a line (or way, respectively) connecting an aperture of a plate through the hollow space with the aperture of an adjacent plate. Accordingly, the length of a "fluid path of a level" is the distance from the aperture a plate following the fluid path through the hollow space of the level until the aperture of the adjacent plate, whereas the length of a "fluid path of a distributor or collector element" is the distance from an aperture of the first outermost plate following the fluid paths through the hollow spaces of all of the levels until the aperture of the opposite outermost plate of the distributor or collector element.

In addition, the term "fractal plate" does mean any plate, wherein the term "fractal" is only used for clarity reasons to easily distinguish these plates from other plates, which are referred further below to as "distribution plates". It is characteristic for a "fractal plate" that a fractal plate being arranged below another plate has a higher number of openings than the adjacent upper plate and that an uppermost fractal plate has a lower number of openings than the adjacent lower plate.

Moreover, the term "substantially parallel to each other" means that two adjacent plates are not inclined in relation to each other by more than 10°, preferably by not more than 5°, more preferably by not more than 2° and still more preferably by not more than 1°. Most preferably, two adjacent plates are arranged parallel to each other, i.e. they are not inclined in relation to each other.

In accordance with the present invention, the openings of each of the at least two fractal plates are surrounded at their lower sides by a wall extending downwardly, defining in the level below the respective fractal plate a channel to be flowed through by the second main fluid. This means that each of the walls is attached to the lower surface of the respective fractal plate and extends onto the upper surface of the adjacent lower plate, wherein the wall encases the openings of the upper fractal plate as well as the openings of the lower plate so that gas or liquid flowing through the opening of the upper fractal plate flows into and through the channel into the corresponding opening of the lower plate. Thus, preferably the each of the walls has the same form and dimensions as the corresponding opening encased thereby.

It follows from the above that particularly preferably the channels to be flowed through by the second main fluid are in each level fluid-tightly separated by the walls from all of the one or more hollow spaces defining the fluid paths, through which the first fluid may flow.

In accordance with a particularly preferred embodiment of the present invention, the distributor or collector element comprises at least three fractal plates being arranged at least substantially parallel to each other defining each a level between two adjacent fractal plates, wherein the third fractal plate of the at least three fractal plates forming the bottom of the second level comprises a third number of openings each of which being surrounded lower side by a wall extending downwardly and defining in the third level below the second fractal plate a channel to be flowed through by the second main fluid, wherein in the third level between the walls defining the channels one or more hollow spaces defining one or more fluid paths are formed, through which the first fluid may flow, wherein the third number of openings is higher than the second number of openings, wherein each of the channels of each of the levels is connected with at least one channel of any adjacent level, and wherein at least one of the one or more fluid paths defined by the hollow space(s) of each of the levels is connected with at least one of the one or more fluid paths of any adjacent level by means of at least one aperture being located in the fractal plate separating the adjacent levels from each other. Accordingly, in this embodiment the distributor or collector element comprises at least three fractal plates being arranged at least substantially parallel to each other defining each a level below the fractal plates, wherein the first uppermost of the at least three fractal plates comprises a first number of openings each of which being surrounded at its lower side by a wall extending downwardly and defining in the first level below the first uppermost fractal plate a channel to be flowed through by the second main fluid, wherein in the first level between the walls defining the channels one or more hollow spaces defining one or more fluid paths are formed, through which the first fluid may flow, wherein the second fractal plate of the at least three fractal plates forming the bottom of the first level comprises a second number of openings each of which being surrounded at its lower side by a wall extending downwardly and defining in the second level below the second fractal plate a channel to be flowed through by the second main fluid, wherein in the second level between the walls defining the channels one or more hollow spaces defining one or more fluid paths are formed, through which the first fluid may flow, and wherein the third fractal plate of the at least three fractal plates forming the bottom of the second level comprises a third number of openings each of which being surrounded at its lower side by a wall extending downwardly and defining in the third level below the second fractal plate a channel to be flowed through by the second main fluid, wherein in the third level between the walls defining the channels one or more hollow spaces defining one or more fluid paths are formed, through which the first fluid may flow, wherein the second number of openings is higher than the first number of openings and the third number of openings is higher than the second number of openings, wherein each of the channels of each of the levels is connected with at least one channel of any adjacent level, and wherein at least one of the one or more fluid paths defined by the hollow space(s) of each of the levels is connected with at least one of the one or more fluid paths of any adjacent level by means of at least one aperture being located in the fractal plate separating the adjacent levels from each other.

In all of the aforementioned embodiments, the at least two or at least three fractal plates, respectively, may be arranged during the use at least substantially horizontal. Substantially horizontal means with this regard that each plate does not vary in relation to the horizontal plane by more than 10°, preferably by not more than 5°, more preferably by not more than 2° and still more preferably by not more than 1°. Most preferably, each plate is arranged horizontally, i.e. is not inclined in relation to the horizontal plane.

In order to feed the first fluid into the first level in a controlled manner, it is suggested in a further development of the idea of the present patent application that the first uppermost of the at least two and preferably of the at least three fractal plates comprises an inlet through which the first fluid is transferred into the one or more hollow spaces defining one or more fluid paths of the first level. The inlet may have the form of a pipe, which covers an aperture of the first uppermost fractal plate so that the first fluid may flow through the pipe and through the aperture into a fluid path defined by a hollow space of the first level. Preferably, the aperture and thus also the inlet are arranged centrally in and on the plate, respectively.

The present invention is not particularly limited concerning the form of the at least two and preferably of the at least three fractal plates. For instance, the fractal plates may have a circular, an elliptic, an oval, a rectangular or a square cross-sectional form. Preferably, all fractal plates have the same form and the same dimensions. At least in certain application, the fractal plates have an at least substantially rectangular or square form.

Also concerning the form of the openings of the at least two and preferably of the at least three fractal plates, the present invention is not particularly limited. For example, the openings may have a circular, an elliptic, an oval, a rectangular or a square cross-sectional form. Preferably, all openings have the same form and all openings of each fractal plate have the same dimensions. Good results are in particular obtained, when the openings of each fractal plate have an at least substantially rectangular or square cross-sectional form, wherein the edges of the openings of the rectangle or square, respectively, may be rounded.

As set out above, it is preferred that each of the walls defining the channels have the same form and dimensions as the corresponding openings encased thereby. Accordingly, each of the walls may have a circular, an elliptic, an oval, a rectangular or a square cross-sectional form, wherein rectangular or square cross-sectional form are preferred, wherein the edges of the openings of the rectangle or square, respectively, may be rounded.

In accordance with a further preferred embodiment of the present invention, the openings of each fractal plate are arranged in each fractal plate grid-like, i.e. in a periodic form so that the framework of the fractal plates (which is formed by the parts of the fractal plates except the openings) consists of parallel and crossed bars. Consequently, also the channels of each level to be flowed through by the second main fluid are preferably arranged, seen in the cross-section of the level, grid-like.

In accordance with the present invention, between the walls defining the channels or channel walls, respectively, of each level one or more hollow spaces defining one or more fluid paths are formed, wherein at least one of the one or more fluid paths of each of the levels is connected with at least one of the one or more fluid paths of any adjacent level by means of at least one aperture being located in the fractal plate separating the adjacent levels from each other. If all channel walls of a level are completely separated from each other, one comparable huge hollow space is formed in the level, wherein the hollow space is the whole volume of the level except the sum of the channel volumes.

As set out above, except for only theoretical possible designs of the plates, any level will in practice comprise more than one fluid path, even if the level only comprises one hollow space. It is proposed in a further development of the idea of the present invention that at least in the second and, if present, in each lower level between the walls, which define the channels to be flowed through by the second main fluid, two or more fluid paths defined by the hollow space(s) are formed, wherein each of the fluid paths has at least substantially the same length. By providing fluid paths having at least substantially the same length, a uniform distribution of the first fluid over the cross-section of each level of the distributor element is achieved. "Fluid paths of each level" having "substantially the same length" means in accordance with the present invention that each of the fluid paths of the level does not vary more in the length compared to the length of any other fluid path of the same level by more than 20%, preferably not more than 10%, more preferably not more than 5%, even more preferably not more than 2% and still more preferably not more than 1%. Most preferably of course, all fluid paths of each level have exactly the same length. The single fluid paths defined by the hollow space(s) may be formed by providing one or more partition walls, which are arranged between the channel walls at appropriate locations. Alternatively, the single fluid path(s) defined by the hollow space(s) may be formed by filling parts of the gaps formed between the channels to be flowed through by the second main fluid, whereas other gaps formed between the channels to be flowed through by the second main fluid remain open, thus forming the fluid path(s).

In accordance with a further embodiment of the present invention, it is preferred that each of the fluid paths defined by the hollow space(s) formed between the upper inlet (i.e. the aperture of the uppermost plate) of the distributor element and each of the apertures of the lowest plate of the distributor element, and analogously for the collector element, have at least substantially the same length and flow resistance. In other words, it is particularly preferred that not only the fluid paths formed in each level have in the horizontal plane at least substantially the same length, but that also the fluid paths formed between the upper inlet of the distributor element and each of the apertures of the lowest plate have at least substantially the same length and flow resistance.

In accordance with the present invention, the number of openings in each lower fractal plate is higher than the number of openings in the respective adjacent upper fractal plate. In order to achieve a uniform distribution of the first fluid over the cross-sectional plane it is preferred that the number of openings in each lower fractal plate is a multiple of the number of openings in the respective adjacent upper fractal plate. Thus, preferably the second number of openings is a multiple of the first number of openings, the third number of openings is a multiple of the second number of openings and so on.

Particular good results are obtained as compromise between the desire to minimize the total number of fractal plates in the distributor element and the desire of achieving a very high distribution density, when each lower fractal plate comprises 4-times more openings than the adjacent upper fractal plate. Therefore, it is particularly preferred that the number of openings in each fractal plate is 4 x (4)", wherein n is the number of the respective fractal plate in relation to the first uppermost fractal plate, with the first uppermost fractal plate being fractal plate 1. This embodiment is particularly suitable, when the openings of each fractal plate have an at least substantially rectangular or square cross-sectional form, wherein the edges of the openings of the rectangle or square, respectively, may be rounded.

The number of fractal plates of the distributor element in accordance with the present invention depends on the specific application. However, in general it is preferred that the distributor element comprises 2 to 15, more preferably 2 to 12, still more preferably 2 to 10 and most preferably 3 to 5 fractal plates, wherein each lower fractal plate has a higher number of openings than the respective upper fractal plate. Below the lowest fractal plate one or more distribution plates may be arranged as described further below. However, below the lowest fractal plate also any other plate may be arranged so as to form a boundary for the level below the lowest fractal plate.

As set out above, in accordance with the present invention, the number of openings in each lower fractal plate is higher than the number of openings in the respective adjacent upper fractal plate. Likewise thereto, it is preferred that the number of apertures in each lower fractal plate is higher than the number of apertures in the respective adjacent upper fractal plate. More specifically, it is preferred that each fractal plate comprises a plurality of apertures, wherein the number of apertures is between 0,1 and 200%, preferably between 0,5 and 50%, more preferably between 1 and 20%, still more preferably between 3 and 10% and most preferably about 6,25% of the number of openings in the fractal plate.

In order to fulfil the function to connect the fluid path(s) of one level with the fluid path(s) of an adjacent level, it is preferred that the apertures are formed in each fractal plate within the framework of each fractal plate. Framework of a fractal plate is meant to be the total area of the plate minus the sum of areas of the openings, i.e. the part of the plate being between the openings.

Moreover, it is preferred that the apertures are regularly distributed over each fractal plate and that the apertures of each fractal plate have the same form and the same dimensions.

Good results are for instance obtained, when each aperture has an at least substantially circular or crosswise cross-section.

In a further development of the idea of the present invention, it is proposed that the distributor element in accordance comprises below the lowest fractal plate at least one distribution plate. Each of the at least one distribution plate is arranged at least substantially parallel to its adjacent upper plate, so that a level is defined between the at least one distribution plate and the adjacent upper plate. Preferably, each of the at least one distribution plate has the same form and the same number of openings as the adjacent upper plate, wherein the openings of each of the at least one distribution plate have the same form and dimensions as the openings of the adjacent upper plate. In addition, it is preferred that the openings of each of the at least one distribution plate are formed in each of the at least one distribution plate at the same locations as in the adjacent upper plate. In accordance with the present invention, any of the at least one distribution plate has a higher number of apertures than the lowest fractal plate. Thereby, the first fluid is distributed over a larger area of the cross-section of the level formed below each distribution plate as in the level formed below the lowest fractal plate. Thereby, as further explained below in connection with the figures, the distribution plates further distribute the first fluid in the fluid path(s) defined by the hollow space(s). Good results are in particular obtained, when the number of apertures of the uppermost of the at least one distribution plate is at least 50% higher than the number of apertures in the lowest fractal plate. More preferably, the number of apertures in the uppermost of the at least one distribution plate is 100 to 300% higher than the number of apertures in the lowest fractal plate. If the distributor element comprises more than one distribution plate, any lower distribution plate preferably has a higher number of apertures than an adjacent upper plate. In particular, it is preferred that any lower distribution plate has a multiple number of apertures than an adjacent upper plate.

Each of the at least one distribution plate may be arranged at least substantially horizontal to its adjacent plates.

It is further preferred that any of the at least one distribution plate is identical to the lowest fractal plate except that each distribution plate has a higher number of apertures than the lowest fractal plate.

The number of distribution plates depends on the application. However, in general it is preferred that the distributor element comprises 1 to 3 and more preferably 2 or 3 distribution plates.

The distributor element in accordance with the present invention may be applied in a plurality of apparatus, such as for instance in mixing devices. In such a case, it is preferred that the distributor element comprises one or more mixers and preferably static mixers. For instance, at least one static mixer may be arranged in at least one opening of at least one of the fractal plates or of the optional distribution plates.

In particular, at least one static mixer may be arranged in each opening of the at least one of the fractal plates or of the optional distribution plates.

In a particular preferred embodiment of the present invention, the fractal plates and the optional distribution plate(s) have an at least substantially rectangular or square form and each comprises grid-like arranged, at least substantially rectangular or square openings. Accordingly, in this embodiment the first uppermost fractal plate has an at least substantially rectangular or square form and comprises 16 grid-like arranged, at least substantially rectangular or square openings, each of which having at least substantially the same size and form, wherein the 16 openings are arranged in the first uppermost fractal plate equidistantly in 4 rows and 4 columns of openings. Between the channels defined in the level below the fractal plate by the walls, one or more hollow spaces defining one or more fluid paths are formed. Preferably, one fluid path is present, which is defined by partition walls, which are arranged between channel walls, or by filling parts of the gaps formed between the channels to be flowed through by the second main fluid, whereas other gaps formed between the channels to be flowed through by the second main fluid remain open, thus forming the fluid path(s) defined by the hollow space(s). Each of the at least substantially rectangular or square openings may have rounded edges.

Openings having the same size means that the area of one of these openings does vary not more than 20%, preferably not more than 10%, more preferably not more than 5% and most preferably not more than 2% from the area of each of these openings.

In a further development of the present invention, it is proposed that one aperture is formed in the center of the framework of the first fractal plate between four adjacent openings, which is surrounded by a wall extending upwardly and forming the inlet of the distributor element.

For instance, the aperture may be at least substantially circular and the wall surrounding it may be a pipe. Alternatively, the aperture may be at least substantially crosswise and the wall surrounding it may be correspondingly shaped.

Furthermore, it is preferred that each of the 16 openings of the first uppermost fractal plate is surrounded at its lower side by a wall extending downwardly from the lower surface from the first uppermost fractal plate onto the upper surface of the beneath second fractal plate, thus forming in the first level 16 closed channels to be flowed through by the second main fluid and between the walls one or more hollow spaces defining one or more fluid path(s).

In accordance with a further preferred variant of this embodiment of the present invention, the second fractal plate has an at least substantially rectangular or square form and comprises 64 grid-like arranged, at least substantially rectangular or square openings, each of which having at least substantially the same size and form, wherein the 64 openings are arranged in the second fractal plate equidistantly in 8 rows and 8 columns of openings. Each of the at least substantially rectangular or square openings may have rounded edges.

Preferably, each of the 64 openings of the second fractal plate is surrounded by a wall extending downwardly from the lower surface from the second fractal plate onto the upper surface of a beneath plate, thus forming in the second level 64 closed channels to be flowed through by the second main fluid and between the walls one or more hollow spaces defining one or more fluid path(s).

Good results are in particular obtained, when below each of the openings of the first uppermost fractal plate 4 openings of the second fractal plate are placed.

In particular, the second fractal plate may comprise 4 apertures connecting the fluid path(s) of the first level with the one or more fluid path(s) of the second level. Preferably, one aperture is formed at the crossing point between the four openings of the first and second columns of the first and second rows, one aperture is formed at the crossing point between the four openings of the third and fourth columns of the first and second rows, one aperture is formed at the crossing point between the four openings of the first and second columns of the third and fourth rows and one aperture is formed at the crossing point between the four openings of the third and fourth columns of the third and fourth rows.

Optionally, the one or more fluid path(s) may be defined by partition walls, which are appropriately placed in the hollow space(s) between channel walls. Alternatively, the single fluid path(s) may be formed by filling parts of the gaps formed between the channels to be flowed through by the second main fluid, whereas other gaps formed between the channels to be flowed through by the second main fluid remain open, thus forming the fluid path(s).

In accordance with a further preferred variant of this embodiment of the present invention, the distributor or collector element comprises at least a third fractal plate being arranged below the second fractal plate, wherein the third fractal plate has an at least substantially rectangular or square form and comprises 256 grid-like arranged, at least substantially rectangular or square openings, each of which having at least substantially the same size and form, wherein the 256 openings are arranged in the third fractal plate equidistantly in 16 rows and 16 columns of openings. Each of the at least substantially rectangular or square openings may have rounded edges.

Preferably, each of the 256 openings of the third fractal plate is surrounded at its lower side by a wall extending downwardly from the lower surface from the third fractal plate onto the upper surface of a beneath plate, thus forming in the third level 256 closed channels to be flowed through by the second main fluid and between the walls one or more hollow spaces defining one or more fluid path(s).

Good results are in particular obtained, when below each of the openings of the second fractal plate 4 openings of the third fractal plate are placed.

In particular, the third fractal plate comprises 16 apertures connecting the fluid paths defined by the hollow space(s) of the second level with those of the third level, wherein the apertures are formed at the crossing points between the openings of columns 1, 3, 5, 7, 9, 11, 13 and 15 of rows 1, 3, 5, 7, 9, 11, 13 and 15.

In dependency of the application, the distributor or collector element in accordance with the present invention may comprise below the optional third fractal plate one or more further fractal plates. Thus, the distributor element may comprise below the optional third fractal plate a fourth fractal plate having an at least substantially rectangular or square form and comprising 1.024 grid-like arranged, at least substantially rectangular or square openings, each of which having at least substantially the same size and form, wherein the 1.024 openings are arranged in the fourth fractal plate equidistantly in 32 rows and 32 columns of openings. Each of the at least substantially rectangular or square openings may have rounded edges.

Optionally, the distributor or collector element may comprise below the optional fourth fractal plate a fifth fractal plate having an at least substantially rectangular or square form and comprising 4.096 grid-like arranged, at least substantially rectangular or square openings, each of which having at least substantially the same size and form, wherein the 4.096 openings are arranged in the fifth fractal plate equidistantly in 64 rows and 64 columns of openings. Each of the at least substantially rectangular or square openings may have rounded edges.

Further optionally, the distributor element or collector may comprise below the optional fifth fractal plate a sixth fractal plate having an at least substantially rectangular or square form and comprising 16.386 grid-like arranged, at least substantially rectangular or square openings, each of which having at least substantially the same size and form, wherein the 16.386 openings are arranged in the sixth fractal plate equidistantly in 128 rows and 128 columns of openings. Each of the at least substantially rectangular or square openings may have rounded edges.

Further optionally, the distributor or collector element may comprise below the optional sixth fractal plate a seventh fractal plate having an at least substantially rectangular or square form and comprising 65.536 grid-like arranged, at least substantially rectangular or square openings, each of which having at least substantially the same size and form, wherein the 65.536 openings are arranged in the seventh fractal plate equidistantly in 256 rows and 256 columns of openings. Each of the at least substantially rectangular or square openings may have rounded edges.

Independently from whether the distributor element comprises two, three, four, five, six, seven or even more fractal plates, it is in accordance with a further variant of this embodiment particularly preferred that at least a distribution plate is arranged below the lowest fractal plate, which has the same form and same number and dimensions of openings as the lowest fractal plate, wherein the distribution plate has no apertures at the crossing-points below those, in which the apertures of the lowest fractal plate are located, but wherein the distribution plate has apertures at any crossing-point being adjacent to those, in which the apertures of the lowest fractal plate are located. Thereby, during the operation of the distributor element a further distribution of the first fluid is achieved in the one or more fluid path(s) defined by the hollow space(s).

It is further preferred that below the optional above described distribution plate one to five, more preferably one to four and most preferably two, three or four further distribution plates are arranged, which has/have the same form and same number and dimensions of openings as the optional above described distribution plate, wherein each of the further distribution plates has a higher number of apertures than its adjacent upper plate. This allows that any part of the one or more fluid path(s) is filled during the operation of the distributor element with the first fluid and thus via the large number of apertures in the lowest of the distribution plates a particular high distribution density is achieved.

As set out above, between each two plates a level is defined, through which the channels extend and in which the fluid paths defined by the hollow space(s) are arranged. The height of each level, i.e. the distance between the its upper and lower plate may be constant. However, in accordance with a further particular preferred embodiment of the present invention, the distance of the levels varies, whereas more preferably the height of each level decreases from the first to the lowest level. This has the advantage that the flow resistance within each level is not too high. The height of each level or at least of the first level may be between 0.2 and 250 mm, more preferably between 1 and 100 mm and most preferably between 2 and 50 mm.

The openings of each of the plates and preferably at least of the first fractal plate may have a diameter of 1 to 500 mm, more preferably of 1.5 to 100 mm and most preferably of 2 to 50 mm. As indicated above, it is preferred that the diameter of the openings decreases from the first fractal plate to the lowest fractal plate. It is preferred that all openings of each plate have at least substantially the same diameter.

The apertures of each of the plates, preferably of at least of the first fractal plate and more preferably of all plates may have a diameter of 0.1 to 100 mm, more preferably of 0.2 to 50 mm and most preferably of 0.4 to 20 mm. It is preferred that all apertures of each plate have at least substantially the same size, such as diameter.

Each of the apertures having preferably at least substantially the same size means that the area of one of these apertures does vary not more than 20%, preferably not more than 10%, more preferably not more than 5% and most preferably not more than 2% from the area of each of these apertures.

Preferably, the lowest plate of the distributor element or the uppermost plate of the collector element has 1,000 to 1,500,000 and more preferably 20,000 to 200,000 fluid outlets per square meter.

The distributor or collector element, i.e. each of the plates, channel walls and, if present, partition walls, may be formed of any suitable material, such as a ceramic material, a plastic, a metal, an alloy, a composite material or the like. Particular preferred materials are technical ceramics such as but not limited to silicon carbide, silicon nitride, aluminum oxide, mullite and cordierite or metal materials such as but not limited to aluminum alloys or stainless steel or a wide range of plastic materials.

A particular advantage of the distributor element in accordance with the present invention is that it may be easily produced by a generative method, such as screen printing, such as by a method described in WO 2016/095059 A1.

In particular, when the cross-sectional area, over which the first fluid shall be distributed, is very high, it is preferred that a distributor comprises not only one, but two or more of the distributor elements described above.

As described above, the distributor element described above may be used also as collector, i.e. as element for collecting a first fluid distributed over a large cross-sectional plane and collect is at one point. For this purpose, the distributor element described above must be solely inverted.

Thus, the present invention also relates to a collector element for uniformly collecting a first fluid from a cross-sectional plane, in particular from a cross-sectional plane of a mass transfer column, wherein the collector element is embodied as the distributor element, except that it is inverted.

In particular, when the cross-sectional area, over which the first fluid shall be collected, is very high, it is preferred that a collector comprises not only one, but two or more of the collector elements described above.

According to another aspect, the present invention relates to an apparatus, which comprises one or more of the aforementioned distributor elements and/or one or more of the aforementioned collector elements.

For instance, the apparatus may be a mass transfer column, a mixer, a disperser, a foaming device, a chemical reactor, a crystallizer or an evaporator.

In accordance with a preferred embodiment of the present invention, the apparatus is a mass transfer column and comprises below the one or more distributor elements and/or above the one or more collector elements a mass transfer structure, which is selected from the group consisting of contact trays, random packings and structured packings.

In accordance with another preferred embodiment of the present invention, the apparatus is a mass transfer column and comprises below the one or more distributor elements and/or above the one or more collector elements a mass transfer structure, which has a honeycomb shape including capillaries, wherein the walls defining the channels are step-shaped or made of tissue or are arbitrarily formed open-cell foams. Such mass transfer structures are in more detail described in WO 2014/043823 A1 and in WO 2017/167591 A1.

In accordance with still another preferred embodiment of the present invention, the apparatus comprises below the one or more distributor elements and/or above the one or more collector elements a mass transfer structure, which comprises a contact zone, which contact zone is designed to conduct a second fluid, and whereby in the contact zone the first fluid can be brought into contact with the second fluid, wherein in the contact zone at least one flow breaker is provided for interrupting a flow of the second fluid.

In accordance with yet another preferred embodiment of the present invention, the apparatus comprises below the one or more distributor elements and/or above the one or more collector elements a mass transfer structure, which is selected from the group consisting of tissues, open-pored materials, capillaries, step structures and arbitrary combinations of two or more of the aforementioned structures. Another aspect of the present invention is a method for uniformly distributing a first fluid on a cross-sectional plane, wherein a second main fluid flows in co-current flow and/or in counter-current flow with regard to the first fluid through the plane, comprising the steps of flowing a first fluid into at least one of the one or more hollow spaces defining the fluid path and flowing a second fluid through the channels of a distributor element as described above.

Subsequently, the present invention is described by means of illustrative, but not limiting figures.
- Fig. 1: shows a perspective side view of a distributor element according to one embodiment of the present invention.
- Fig. 2: shows a top view of the distributor element shown in Fig 1.
- Fig. 3a: shows a cross-sectional view of the first level below the first fractal plate of the distributor element shown in Fig. 1.
- Fig. 3b: shows a schematic view of Fig. 3a.
- Fig. 4a: shows a cross-sectional view of the second level below the second fractal plate of the distributor element shown in Fig. 1.
- Fig. 4b: shows a schematic view of Fig. 4a.
- Fig. 5a: shows a cross-sectional view of the third level below the third fractal plate of the distributor element shown in Fig. 1.
- Fig. 5b: shows a schematic view of Fig. 5a.
- Fig. 6a: shows a cross-sectional view of the fourth level below the first distribution plate of the distributor element shown in Fig. 1.
- Fig. 6b: shows a schematic view of Fig. 6a.
- Fig. 6c: shows a schematic part of Fig. 6b magnified.
- Fig. 7a: shows a schematic view of the fifth level below the second distribution plate of the distributor element shown in Fig. 1.
- Fig. 7b: shows a schematic part of Fig. 7a magnified.
- Fig. 7c: shows a schematic view of the sixth level below the third distribution plate of the distributor element shown in Fig. 1.
- Fig. 7d: shows a schematic part of Fig. 7c magnified.
- Fig. 7e: shows a schematic view of the seventh level below the fourth distribution plate of the distributor element shown in Fig. 1.
- Fig. 7f: shows a schematic part of Fig. 7e magnified.
- Fig. 8: shows a perspective side view of the internal of a mass transfer column including a distributor element, a structured packing and a collector element according to one embodiment of the present invention.
- Fig. 9: shows a perspective side view of the internal of a mass transfer column including a plurality of distributor elements, a plurality of structured packings and a plurality of collector elements according to another embodiment of the present invention.
- Fig. 10: shows a fractal plate according to another embodiment of the present invention.
- Fig. 11: shows a distributor element including a first fractal plate according to another embodiment of the present invention.

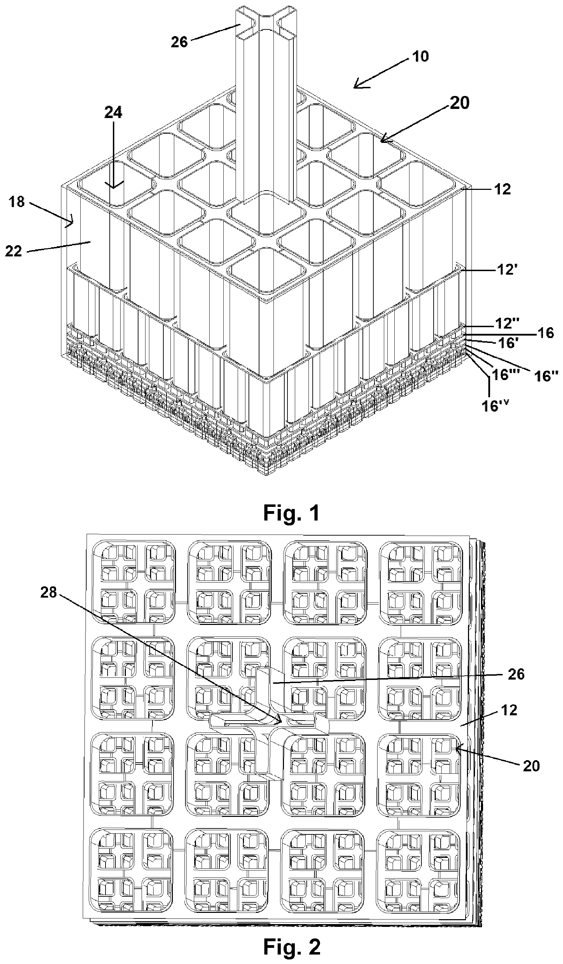

Fig. 1 shows a perspective side view of a distributor element 10 according to one embodiment of the present invention. The distributor element 10 comprises three fractal plates 12, 12', 12" and below the third fractal plate 12'" five distribution plates 16, 16', 16", 16''', 16^{iv}. Between each two adjacent plates 12, 12', 12", 16, 16', 16", 16''', 16^{iv}, a level 18 is defined. Each plate 12, 12', 12", 16, 16', 16", 16''', 16^{iv} comprises openings 20, wherein each opening 20 has a square cross-section with rounded edges. Each opening 20 is surrounded by a wall 22 defining in each level 18 below each plate 12, 12', 12", 16, 16', 16", 16'''16^{iv} a channel 24 to be flowed through by the second main fluid. Above the center of the first fractal plate 12, an inlet 26 in the form of a pipe is arranged.

Fig. 2 shows a top view of the distributor element 10 shown in Fig. 1. The uppermost fractal plate 12 comprises sixteen grid-like arranged, at least substantially square openings 20 having rounded edges. Each of the openings 20 has the same size and form, wherein the 16 openings are arranged in the first uppermost fractal plate 12 equidistantly in 4 rows and 4 columns of openings 20. An essentially cross-shaped aperture 28 is arranged in the center of the first fractal plate 12 and is surrounded by an inlet 26 having a corresponding form.

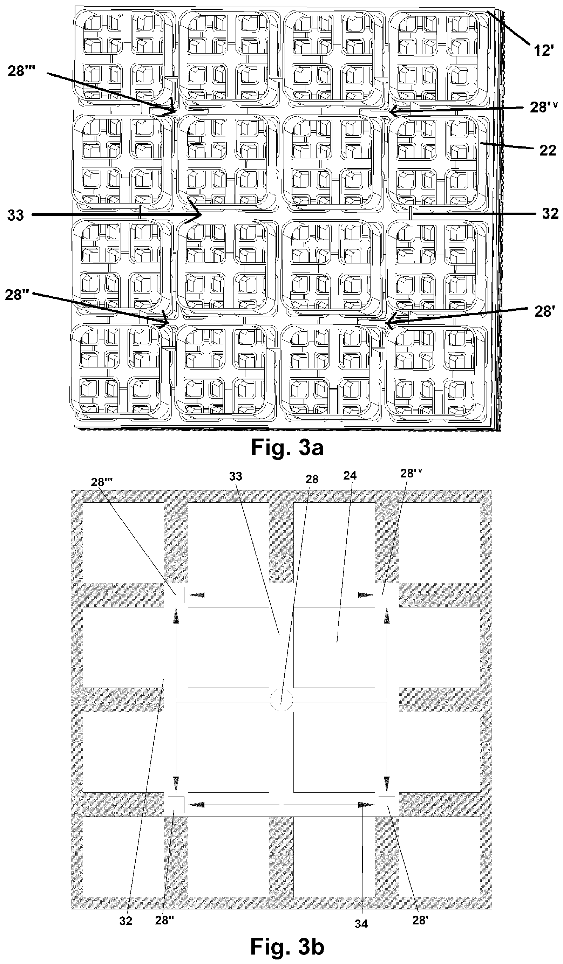

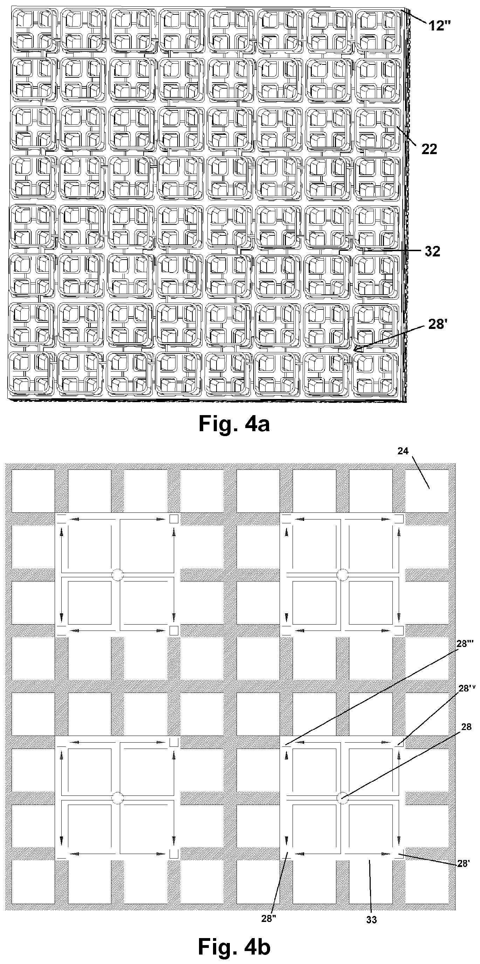

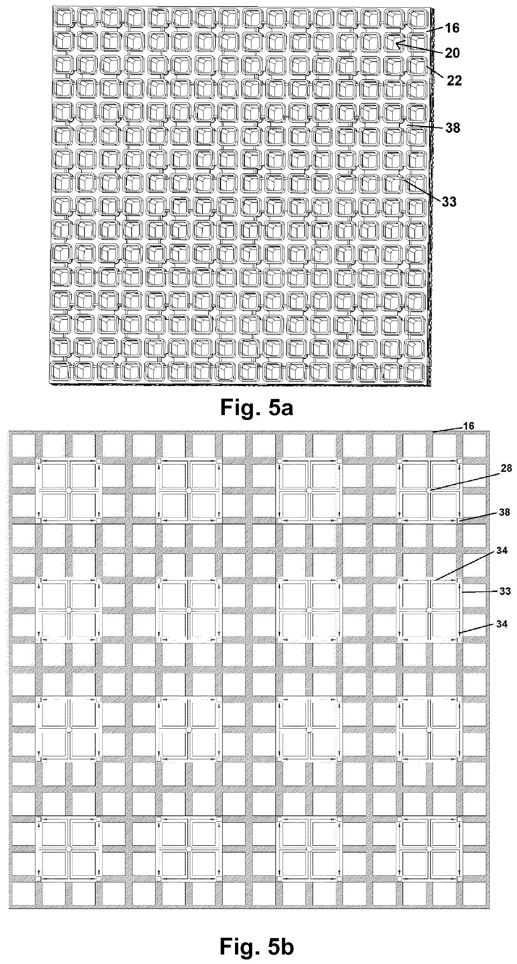

Fig. 3a shows a cross-sectional view of the first level 18 below the first fractal plate 12 and above the second fractal plate 12' of the distributor element 10 shown in Fig. 1, and Fig. 3b shows a schematic view of Fig. 3a. Sixteen channels 24 are located below the openings 20 of the uppermost fractal plate 12, wherein each channel 24 is surrounded by a channel wall 22, which extends from the lower surface of the uppermost first fractal plate 12 onto the upper surface of the second fractal plate 12'. The circle 28 in Fig. 3b schematically shows the location of the aperture 28 formed in the uppermost fractal plate 12, through which the first fluid enters during the operation of the distributor element 10 into the first level 18. Even if the aperture 28 formed in the uppermost fractal plate 12 is, as shown in Fig. 2, essentially cross-shaped, the aperture of the plate 12 being arranged above the level 18 shown in Fig. 3b is shown in Fig. 3b and in the subsequent further schematic Fig. 4b and 5b as circle, in order to show that it is an "incoming aperture", i.e. an aperture, through which liquid flows into the level 18. In contrast thereto, the apertures 28', 28", 28''', 28'^{v} of the plate 12' being arranged below the level 18 shown in Fig. 3b are shown in Fig. 3b and in the subsequent further schematic Fig. 4b, 5b, 6b, 7a, 7c and 7e as rectangular, in order to show that they are "outcoming apertures", i.e. apertures, through which liquid flows into the next lower level. Between some of the channel walls 22, partition walls 32 are arranged, which define a hollow space defining eight fluid paths 33 between and around the four central channels 20 of the first level 18. Each of the eight fluid paths 33 of the first level 18 have at least substantially the same length. The flow direction of the first fluid during the operation of the distributor element 10 in the eight fluid paths 33 defined by in the hollow space is schematically shown by the arrows 34. Those parts of the channels 24, which cannot be flown through by the first fluid due to the partition walls 32 are shown in Fig. 3b shaded or hatched, respectively. Accordingly, during the operation of the distributor element 10 the first fluid entering into the hollow space of the first level 18 through the inlet 26 and the central aperture 28 of the first uppermost fractal plate 12 flows along the eight fluid paths 33 defined in the hollow space between the four central channels 24, during which the first fluid is deflected at the partition walls 32 and is directed to the four apertures 28', 28", 28''', 28^{iv} of the second fractal plate 12', from which it flows downwardly into the second level. Thus, the first fluid is distributed in the first level from one central point 28 via the eight fluid paths 33 formed by the channels 24 and the partition walls 32 and collected in the four apertures 28', 28", 28''', 28^{iv}.

Fig. 4a shows a cross-sectional view of the second level below the second fractal plate 12' and above the third fractal plate 12" of the distributor element 10 shown in Fig. 1, and Fig. 4b shows a schematic view of Fig. 4a. Sixty four channels 24 are located below the openings 20 of the second fractal plate 12', wherein each channel 24 is surrounded by a channel wall 22, which extends from the lower surface of the second fractal plate 12' onto the upper surface of the third fractal plate 12". The four circles 28 schematically show the location of the apertures 28 formed in the second fractal plate 12', through which the first fluid enters during the operation of the distributor element 10 into the second level 18. Again, the apertures 28 of the plate 12' being arranged above the level shown Fig. 4b are shown in Fig. 4b as circle, even if the apertures 28', 28", 28''', 28'^{v} formed in the upper fractal plate 12' are, as shown in Fig. 3a, essentially cross-shaped, in order to show that they are "incoming apertures" 28, i.e. apertures 28, through which liquid flows into the level. In contrast thereto, the apertures 28', 28", 28''', 28'^{v} of the plate 12" being arranged below the level shown in Fig. 4b are shown in Fig. 4b as rectangular, in order to show that they are "outcoming apertures" 28', 28", 28''', 28'^{v}, i.e. apertures 28', 28", 28''', 28'^{v}, through which liquid flows into the next lower level. Between some of the channel walls 22, partition walls 32 are arranged, which define 32 fluid paths 33, each fluid path being defined in or by, respectively, the hollow spaces between and around four channels 20 surrounding an aperture 28' of the second fractal plate 12'. The flow direction of the first fluid during the operation of the distributor element 10 is schematically shown by the arrows 34. Again, those parts of the channels 24, which cannot be flown through by the first fluid due to the partition walls 32 are shown in Fig. 4b shaded or hatched, respectively. Accordingly, during the operation of the distributor element 10 the first fluid entering into the second level through the apertures 28 flows along the 32 fluid paths 33 defined in the hollow spaces between the respective channels 24, during which the first fluid is deflected at the partition walls 32 and is directed to the sixteen apertures 28', 28", 28''', 28'^{v} of the third fractal plate 12", from which it flows downwardly into the third level. Thus, the first fluid is distributed in the second level from four apertures 28 to the sixteen apertures 28', 28", 28''', 28'^{v}.

Fig. 5a shows a cross-sectional view of the third level 18 below the third fractal plate 12" and above the first distribution plate 16 of the distributor element 10 shown in Fig. 1, and Fig. 5b shows a schematic view of Fig. 5a. Two hundred fifty six channels 24 are located below the openings 20 of the third fractal plate 12", wherein each channel 24 is surrounded by a channel wall 22, which extends from the lower surface of the third fractal plate 12" onto the upper surface of the first distribution plate 16. The sixteen circles 28 schematically show the location of the apertures 28', 28", 28''', 28'^{v} formed in the third fractal plate 12", through which the first fluid enters during the operation of the distributor element 10 into the third level. Again, the apertures 28 of the plate 12" being arranged above the level shown Fig. 5b are shown in Fig. 5b as circle, even if the apertures 28', 28", 28''', 28'^{v} formed in the upper fractal plate 12" are, as shown in Fig. 4a, essentially cross-shaped, in order to show that they are "incoming apertures" 28, i.e. apertures 28, through which liquid flows into the level. In contrast thereto, the apertures 38 of the distribution plate 16 being arranged below the level shown in Fig. 5b are shown in Fig. 5b as rectangular, in order to show that they are "outcoming apertures" 38, i.e. apertures 38, through which liquid flows into the next lower level. However, in fact, as shown in Fig. 5a, the apertures 38 of the distribution plate 16 as well as those of all lower distribution plates 16', 16", 16''', 16'^{v} are circular and not, as in the upper fractal plates 12, 12', 12''' essentially cross-shaped. Between some of the channel walls 22, partition walls (not shown in Figures 5a and Fig. 5b) are arranged, which define 128 fluid paths 33, each fluid path 33 being defined or formed, respectively, in the hollow spaces of the third level. The flow direction of the first fluid during the operation of the distributor element 10 is schematically shown by the arrows 34. Again, those parts of the channels 24, which cannot be flown through by the first fluid due to the partition walls 32 are shown in Fig. 5b shaded or hatched, respectively. Accordingly, during the operation of the distributor element 10 the first fluid entering into the third level through the apertures 28 flows along the 128 fluid paths 33 defined in the hollow spaces between the respective channels 24, during which the first fluid is deflected at the partition walls and is directed to the sixty four apertures 38 of the first distribution plate 16, from which it flows downwardly into the fourth level. Thus, the first fluid is distributed in the third level from sixteen apertures 28 to the sixty four apertures 38.

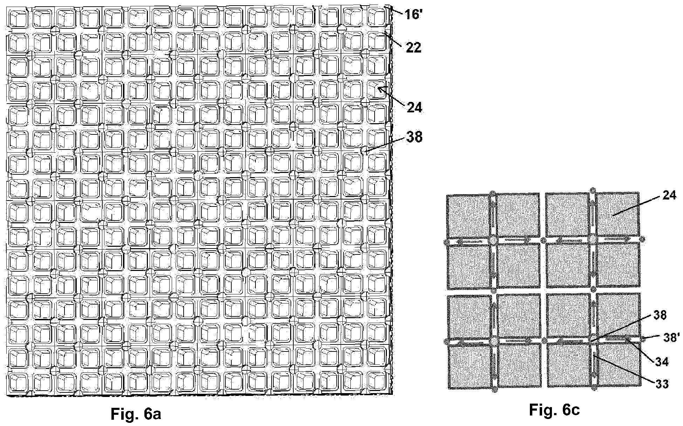

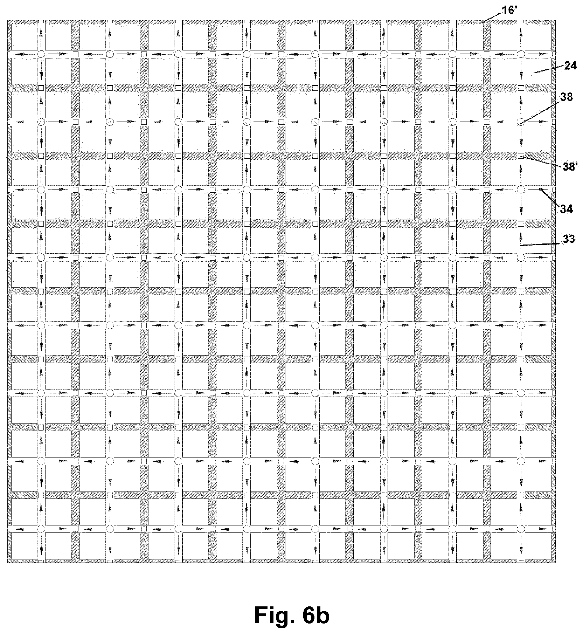

Fig. 6a shows a cross-sectional view of the fourth level below the first distribution plate 16 and above the second distribution plate 16' of the distributor element 10 shown in Fig. 1. Fig. 6b shows a schematic view of Fig. 6a and Fig. 6c shows a part of Fig. 6b magnified. The first distribution plate 16 has the same form and same number and dimensions of openings 20 as the third fractal plate 12", wherein the first distribution plate 16 has no apertures 38 at the crossing-points below those, in which the apertures 28', 28", 28''', 28'^{v} of the third fractal plate 12" are located, but wherein the first distribution plate 16 has apertures 38 at any crossing-point being adjacent to those, in which the apertures 28', 28", 28''', 28'^{v} of the third fractal plate 12" are located. Thereby, during the operation of the distributor element 10 a further distribution of the first fluid is achieved in the fluid paths 33 defined by the hollow space(s) as shown in Fig. 6b and 6c.

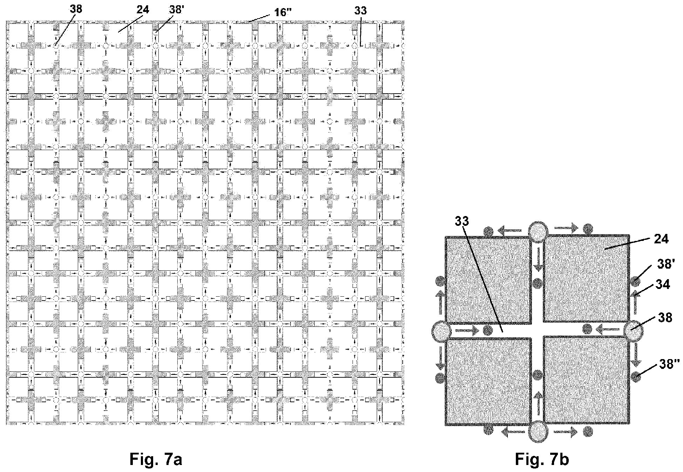

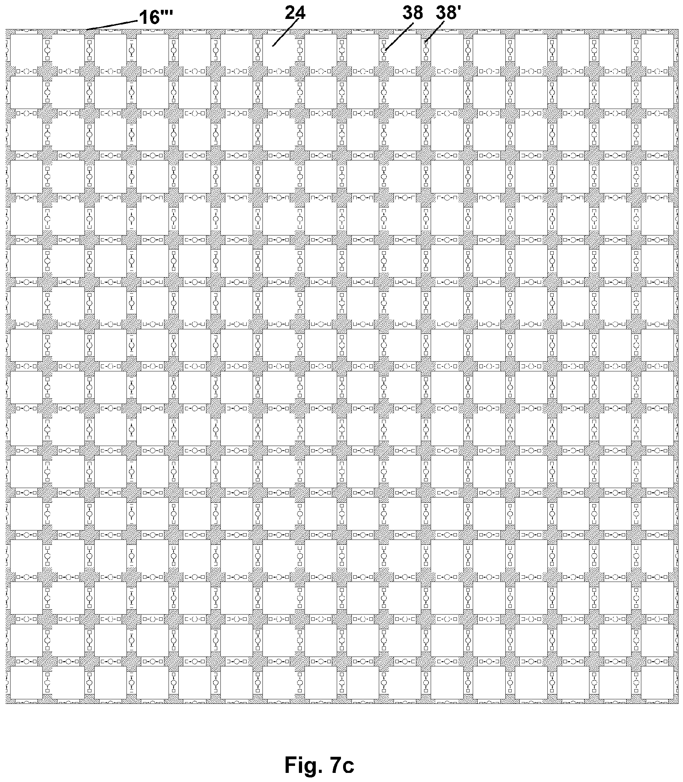

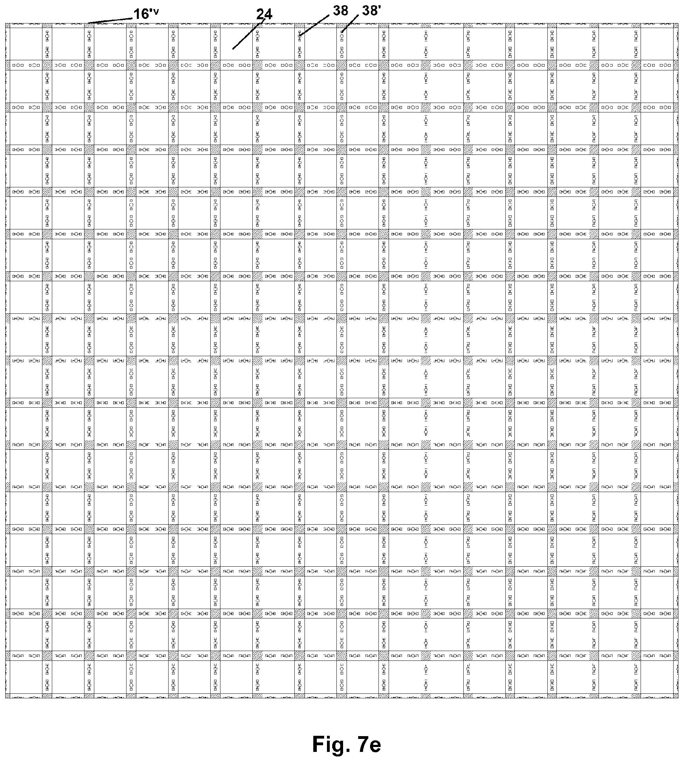

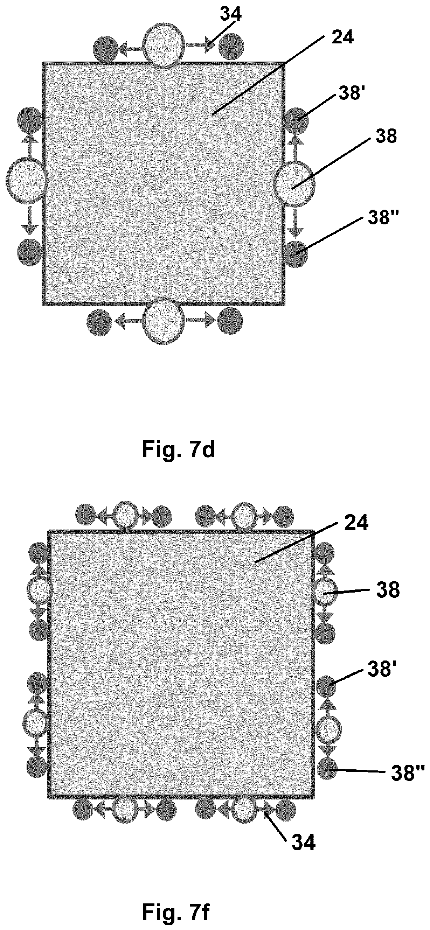

As shown in fig. 7a to 7e, between each adjacent of the four further distribution plates 16', 16", 16''', 16^{iv} a level is defined. Each of the four further distribution plates 16', 16", 16''', 16^{iv} has the same form and same number and dimensions of openings 20 as the third fractal plate 12" and the first distribution plate 16. However, each of the further distribution plates 16', 16", 16''', 16^{iv} has a higher number of apertures 38, 38', 38" than its adjacent upper plate 16, 16', 16", 16"'. This allows that any part of the hollow space(s) defining the fluid paths 33 is filled during the operation of the distributor element with the first fluid and thus via the large number of apertures 38, 38', 38" in the lowest of the distribution plates 16^{iv} a particular high distribution density is achieved.

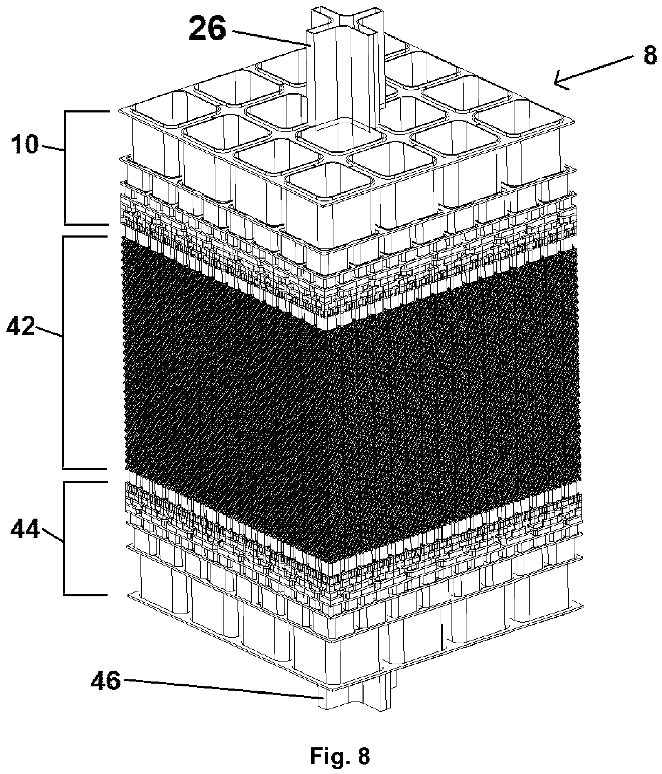

Fig. 8 shows a perspective side view of the internal 40 of a mass transfer column 8 including a distributor element 10, a structed packing 42 and a collector element 44. The mass transfer column 8 may be a rectification column 8. The distributor element 10 is composed as described above and as shown in Fig. 1 to 7. The collector element 44 is composed as the distributor element 10, but simply inverted so that the first fractal plate is the lowest plate and the fifth distribution plate is the uppermost plate. During the operation of the mass transfer column 8, liquid enters the distributor element 10 via the inlet 16 and is distributed over the cross-sectional plane as described above with reference to Fig. 1 to 7. The distributed liquid then flows downwardly onto the surface of the structured packing 42 and further downwards. Gas continuously flows in the counter-direction, i.e. from the bottom of the mass transfer column 8 upwardly. In the structured packing, an intensive mass and energy transfer between the liquid and gas occurs, since both are distributed over the large specific surface area of the structured packing 42. The liquid then flows onto the surface of the collector element 44, in which it is collected and concentrated in one point, from which it leaves the internal via the outlet 46.

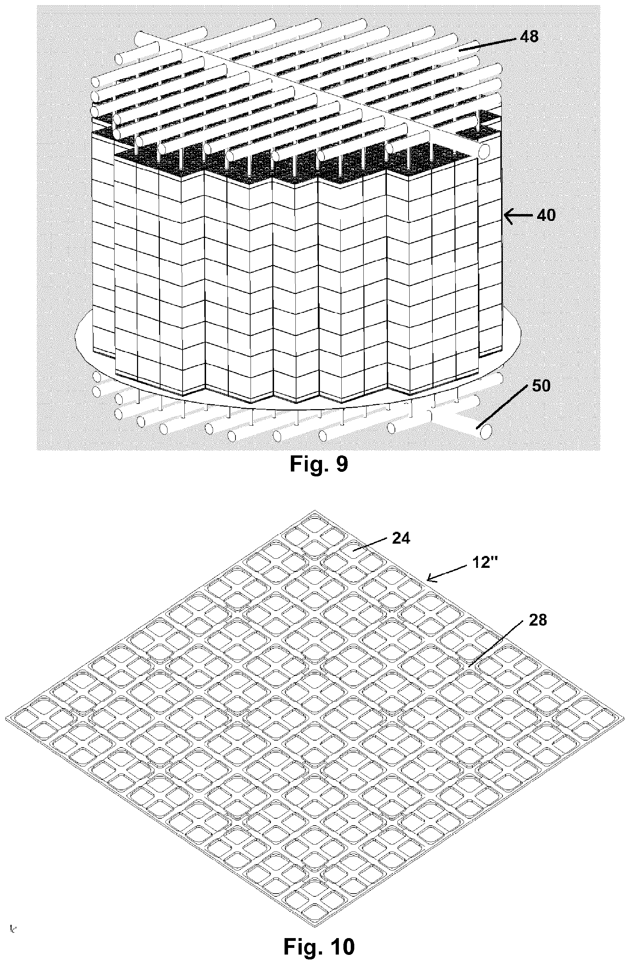

Fig. 9 shows a perspective side view of the internal of a mass transfer column 8 including a plurality of distributor elements 10, a plurality of structured packings 42 and a plurality of collectors elements 44, each of which being composed as described above and as shown in Fig. 8. In order to distribute the first fluid to all of the plurality of distributor elements 10, a distribution manifold 48 is arranged above the plurality of distributor elements 10. Likewise, a collector manifold 50 is arranged below the plurality of collector elements 44.

Fig. 10 shows a fractal plate 12" according to another embodiment of the present invention. The fractal plate 12" is similar to the third fractal plate 12" of the embodiment shown in Fig. 1, 2 and 4 except that the dimensions of the apertures 28 having an essentially cross-shaped cross-section are slightly different.

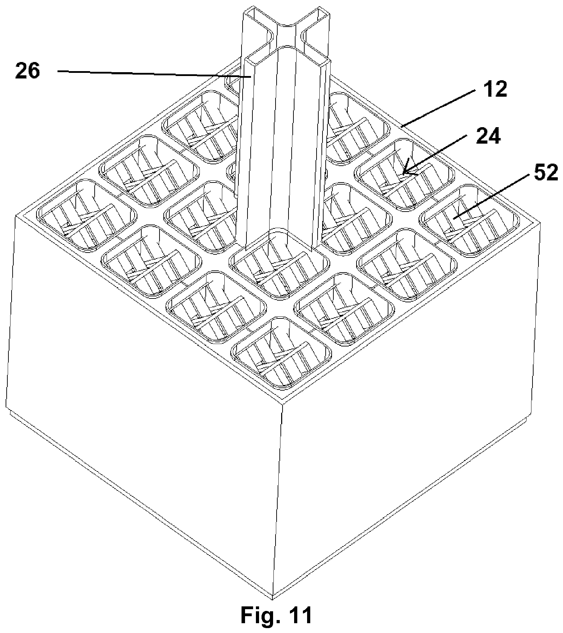

Fig. 11 shows a distributor element including a first fractal plate 12 according to another embodiment of the present invention. The first fractal plate 12 is similar to the first fractal plate 12 of the embodiment shown in Fig. 1 and 2 except that within the channels 24 static mixers 52 are arranged for mixing the second main fluid flowing therethrough during the operation of the distributor element 10.

### Reference Numerals

- 8: Mass transfer column
- 10: Distributor element
- 12, 12', 12": Fractal plate
- 16, 16', 16", 16''', 16^{iv}: Distribution plate
- 18: Level
- 20: Opening
- 22: Channel wall
- 24: Channel
- 26: Inlet
- 28, 28', 28", 28"', 28^{iv}: Aperture of fractal plate
- 32: Partition wall
- 33: Fluid path
- 34: Flow direction of the first fluid in the fluid path
- 38, 38', 38": Aperture of distribution plate
- 40: Internal of a mass transfer column
- 42: Structured packing
- 44: Collector element
- 46: Outlet
- 48: Distribution manifold
- 50: Collector manifold
- 52: Static mixer

## Claims

1. A distributor element (10) for uniformly distributing a first fluid on a cross-sectional plane or a collector element (10) for collecting a first fluid being distributed on a cross-sectional plane, wherein a second main fluid flows in co-current flow and/or in counter-current flow with regard to the first fluid through the distributor or collector element (10), wherein the distributor or collector element (10) comprises at least two fractal plates (12, 12', 12") being arranged at least substantially parallel to each other defining each a level (18) below the fractal plates (12, 12', 12"), wherein the first uppermost of the at least two fractal plates (12, 12', 12") comprises a first number of openings (20) each of which being surrounded at its lower side by a wall (22) extending downwardly and defining in the first level (18) below the first uppermost fractal plate (12) a channel (24) to be flowed through by the second main fluid, wherein in the first level (18) between the walls (22) defining the channels (24) one or more hollow spaces defining one or more fluid paths (33) are formed, through which the first fluid may flow, wherein the second fractal plate (12') of the at least two fractal plates (12, 12', 12") forming the bottom of the first level (18) comprises a second number of openings (20) each of which being surrounded at its lower side by a wall (22) extending downwardly and defining in the second level (18) below the second fractal plate (12') a channel (24) to be flowed through by the second main fluid, wherein in the second level (18) between the walls (22) defining the channels (24) one or more hollow spaces defining one or more fluid paths (33) are formed, through which the first fluid may flow, wherein the second number of openings (20) is higher than the first number of openings (20), wherein each of the channels (24) of each of the levels (18) is connected with at least one channel (24) of any adjacent level (18), and wherein at least one of the one or more fluid paths (33) of each of the levels is connected with at least one of the one or more fluid paths (33) of any adjacent level (18) by means of at least one aperture (28, 28', 28", 28''', 28^{iv}) being located in the fractal plate (12, 12', 12") separating the adjacent levels (18) from each other.

2. The distributor or collector element (10) in accordance with claim 1, wherein the distributor or collector element (10) comprises at least three fractal plates (12, 12', 12") being arranged at least substantially parallel to each other defining each a level (18) between two adjacent fractal plates (12, 12', 12"), wherein the third fractal plate (12") of the at least three fractal plates (12, 12', 12") forming the bottom of the second level (18) comprises a third number of openings (20) each of which being surrounded lower side by a wall (22) extending downwardly and defining in the third level (18) below the second fractal plate (12') a channel (24) to be flowed through by the second main fluid, wherein in the third level (18) between the walls (22) defining the channels (24) one or more hollow spaces defining one or more fluid paths (33) are formed, through which the first fluid may flow, wherein the third number of openings (20) is higher than the second number of openings (20), wherein each of the channels (24) of each of the levels (18) is connected with at least one channel (24) of any adjacent level (18), and wherein at least one of the one or more fluid paths (33) of each of the levels is connected with at least one of the one or more fluid paths (33) of any adjacent level (18) by means of at least one aperture (28, 28', 28", 28''', 28^{iv}) being located in the fractal plate (12, 12', 12") separating the adjacent levels (18) from each other.

3. The distributor or collector element (10) in accordance with claim 1 or 2, wherein the channels (24) to be flowed through by the second main fluid are fluid-tightly separated by the walls (22) from all of the one or more hollow spaces defining the fluid paths (33), through which the first fluid may flow.

4. The distributor or collector element (10) in accordance with any of the preceding claims, wherein each of the at least two fractal plates (12, 12', 12") has an at least substantially rectangular or square form, wherein the openings (20) of each fractal plate (12, 12', 12") are at least substantially rectangular or square, and wherein the openings (20) of each fractal plate (12, 12', 12") are arranged in each fractal plate (12, 12', 12") grid-like.

5. The distributor or collector element (10) in accordance with any of the preceding claims, wherein in the second and, if present, in each lower level (18) between the walls (22), which define the channels (24) to be flowed through by the second main fluid, one or more hollow spaces defining two or more fluid paths (33) are formed, wherein each of the fluid paths (33) has at least substantially the same length.

6. The distributor or collector element (10) in accordance with any of the preceding claims, wherein the number of openings (20) in each fractal plate (12, 12', 12") is 4 x (4)ⁿ, wherein n is the number of the respective fractal plate (12, 12', 12") in relation to the first uppermost fractal plate (12, 12', 12"), with the first uppermost fractal plate (12) being fractal plate 1.

7. The distributor element (10) in accordance with any of the preceding claims, which comprises 2 to 15, preferably 2 to 12, more preferably 2 to 10 and most preferably 3 to 5 fractal plates (12, 12', 12"), wherein each lower fractal plate (12', 12") has a higher number of openings (20) than the respective upper fractal plate (12, 12'), and wherein each fractal plate (12, 12', 12") comprises a plurality of apertures (28, 28', 28", 28''', 28^{iv}), wherein the number of apertures (28, 28', 28", 28''', 28^{iv}) is preferably between 0,1 and 200%, more preferably between 0,5 and 50%, yet more preferably between 1 and 20% and still more preferably between 3 and 10% of the number of openings (20) in the fractal plate (12, 12', 12").

8. The distributor or collector element (10) in accordance with any of the preceding claims, wherein below the lowest fractal plate (12") at least one distribution plate (16, 16', 16", 16''', 16^{iv}) is present, wherein each of the at least one distribution plate (16, 16', 16", 16''', 16^{iv}) is arranged at least substantially parallel to the adjacent upper plate defining a level (18) between the adjacent upper plate and the at least one distribution plate (16, 16', 16", 16''', 16^{iv}), and wherein each of the at least one distribution plate (16, 16', 16", 16''', 16^{iv}) has the same form and the same number of openings (20) as the adjacent upper plate, wherein the openings (20) of each of the at least one distribution plate (16, 16', 16", 16''', 16^{iv}) have the same form and dimensions as the openings (20) of the adjacent upper plate and are formed in each of the at least one distribution plate (16, 16', 16", 16''', 16^{iv}) at the same locations as in the adjacent upper plate, wherein the distributor or collector element (10) comprises 1 to 3 and preferably 2 or 3 distribution plates (16, 16', 16", 16''', 16^{iv}), and wherein each of the distribution plates (16, 16', 16", 16''', 16^{iv}) has a higher number of apertures (38, 38', 38") than the adjacent upper plate.

9. The distributor or collector element (10) in accordance with any of the preceding claims, wherein the first uppermost fractal plate (12) has an at least substantially rectangular or square form and comprises 16 grid-like arranged, at least substantially rectangular or square openings (20), each of which having at least substantially the same size and form, wherein the 16 openings (20) are arranged in the first uppermost fractal plate (12) equidistantly in 4 rows and 4 columns of openings (20).

10. The distributor or collector element (10) in accordance with claims 9, wherein each of the 16 openings (20) of the first uppermost fractal plate (12) is surrounded by a wall (22) extending downwardly from the lower surface from the first uppermost fractal plate (12) to the upper surface of the beneath second fractal plate (12'), thus forming in the first level (18) 16 closed channels (24) to be flowed through by the second main fluid and between the walls (22) one or more hollow spaces defining the fluid paths (33).

11. The distributor or collector element (10) in accordance with claim 9 or 10, wherein the second fractal plate (12') being arranged below the first fractal plate (12) has an at least substantially rectangular or square form and comprises 64 grid-like arranged, at least substantially rectangular or square openings (20), each of which having at least substantially the same size and form, wherein the 64 openings (20) are arranged in the second fractal plate (12') equidistantly in 8 rows and 8 columns of openings (20), wherein each of the 64 openings (20) of the second fractal plate (12') is surrounded by a wall (22) extending downwardly from the lower surface from the second fractal plate (12') to the upper surface of a beneath plate, thus forming in the second level (18) 64 closed channels (24) to be flowed through by the second main fluid and between the walls (22) one or more hollow spaces defining the fluid paths (33), and wherein the second fractal plate (12') comprises 4 apertures (28, 28', 28", 28''', 28^{iv}) connecting the fluid paths (33) of the first level (18) with those of the second level (18), wherein one aperture (28, 28', 28", 28''', 28^{iv}) is formed at the crossing point between the four channels (24) of the first and second columns of the first and second rows, one aperture (28, 28', 28", 28''', 28^{iv}) is formed at the crossing point between the four channels (24) of the third and fourth columns of the first and second rows, one aperture (28, 28', 28", 28"', 28^{iv}) is formed at the crossing point between the four channels (24) of the first and second columns of the third and fourth rows and one aperture (28, 28', 28", 28''', 28^{iv}) is formed at the crossing point between the four channels (24) of the third and fourth columns of the third and fourth rows.

12. The distributor or collector element (10) in accordance with any of claims 9 to 11, which comprises at least a third fractal plate (12") being arranged below the second fractal plate (12'), wherein the third fractal plate (12") has an at least substantially rectangular or square form and comprises 256 grid-like arranged, at least substantially rectangular or square openings (20), each of which having at least substantially the same size and form, wherein the 256 openings (20) are arranged in the third fractal plate (12") equidistantly in 16 rows and 16 columns of openings (20), wherein each of the 256 openings (20) of the third fractal plate (12") is surrounded by a wall (22) extending downwardly from the lower surface from the third fractal plate (12") to the upper surface of a beneath plate, thus forming in the third level (18) 256 closed channels (24) to be flowed through by the second main fluid and between the walls (22) one or more hollow spaces defining the fluid paths (33), and wherein below each of the openings (20) of the second fractal plate (12') 4 openings (20) of the third fractal plate (12") are placed.

13. The distributor or collector element (10) in accordance with any of claims 9 to 12, which comprises at least a third fractal plate (12") being arranged below the second fractal plate (12'), wherein the third fractal plate (12") comprises 16 apertures (28, 28', 28", 28''', 28^{iv}) connecting the fluid paths (33) of the second level (18) with those of the third level (18), wherein the apertures (28, 28', 28", 28''', 28^{iv}) are formed adjacent to the one or more hollow spaces defining the fluid paths (33) at the crossing points between the channels (24) of columns 1, 3, 5, 7, 9, 11, 13 and 15 of rows 1, 3, 5, 7, 9, 11, 13 and 15, and wherein the distributor or collector element (10) preferably comprises below the third fractal plate (12") a fourth fractal plate having an at least substantially rectangular or square form and comprising 1.024 grid-like arranged, at least substantially rectangular or square openings (20), each of which having at least substantially the same size and form, wherein the 1.024 openings (20) are arranged in the fourth fractal plate equidistantly in 32 rows and 32 columns of openings (20).

14. The distributor or collector element (10) in accordance with any of claims 9 to 13, wherein below the lowest fractal plate (12") a distribution plate (16) is arranged, which has the same form and same number and dimensions of openings (20) as the lowest fractal plate (12"), wherein the distribution plate (16) has no apertures adjacent to the one or more hollow spaces defining the fluid paths (33) at the crossing-points below those, in which the apertures (28, 28', 28", 28''', 28^{iv}) of the lowest fractal plate (12") are located, but wherein the distribution plate (16) has apertures (38, 38', 38") at any crossing-point being adjacent to those, in which the apertures (28, 28', 28", 28''', 28^{iv}) of the lowest fractal plate (12") are located, and wherein preferably below the distribution plate (16) one to five, preferably one to four and more preferably two, three or four further distribution plates (16', 16", 16''', 16^{iv}) are arranged, which has/have the same form and same number and dimensions of openings (20) as the lowest fractal plate (12") and the distribution plate (16), wherein each of the further distribution plates (16, 16', 16", 16''', 16^{iv}) has a higher number of apertures (38, 38', 38") than its adjacent upper plate.

15. An apparatus comprising one or more distributor elements (10) and/or one or more collector elements (10) in accordance with any of claims 1 to 14, wherein preferably:
i) the apparatus is a mass transfer column (8), a mixer, a disperser, a foaming device, a chemical reactor, a crystallizer or an evaporator, or
ii) the apparatus is a mass transfer column (8) and comprises below the one or more distributor elements (10) and/or above the one or more collector elements (10) a mass transfer structure, which is selected from the group consisting of contact trays, random packings and structured packings (42), or
iii) the apparatus is a mass transfer column (8) and comprises below the one or more distributor elements (10) and/or above the one or more collector elements (10) a mass transfer structure, which has a honeycomb shape including capillaries, wherein the walls (22) defining the channels (24) are step-shaped or made of tissue or are arbitrarily formed open-cell foams, or
iv) the apparatus comprises below the one or more distributor elements (10) and/or above the one or more collector elements (10) a mass transfer structure, which comprises a contact zone, which contact zone is designed to conduct a second fluid, and whereby in the contact zone the first fluid can be brought into contact with the second fluid, wherein in the contact zone at least one flow breaker is provided for interrupting a flow of the second fluid, or
v) the apparatus comprises below the one or more distributor elements (10) and/or above the one or more collector elements (10) a mass transfer structure, which is selected from the group consisting of tissues, open-pored materials, capillaries, step structures and arbitrary combinations of two or more of the aforementioned structures.

16. Use of a distributor element (10) in accordance with any of claims 1 to 14 for uniformly distributing a first fluid on a cross-sectional plane and/or of a collector element (10) in accordance with any of claims 1 to 14 for collecting a first fluid being distributed on a cross-sectional plane comprising the step of flowing a first fluid into at least one of the one or more hollow spaces defining the fluid paths and flowing a second fluid through the channels of the distributor and/or collector element, wherein preferably the distributor and/or collector element is used in a mass transfer column (8), a mixer, a disperser, a foaming device or a chemical reactor.
